# EUROPÄISCHE PATENTSCHRIFT

(11) **EP 0 527 141 B1**
(45) Veröffentlichungstag und Bekanntmachung des Hinweises auf die Patenterteilung: **14.09.1994**
(21) Anmeldenummer: 91906635.7
(22) Anmeldetag: 28.03.1991
(51) Int. Cl.: H04M 9/02, H04J 1/04, H04B 1/40

(54) **SPRACHÜBERTRAGUNGSSYSTEM**
SPEECH-TRANSMISSION SYSTEM
SYSTEME DE TRANSMISSION VOCALE

(30) Priorität: 02.05.1990 DE 4014132
(43) Veröffentlichungstag der Anmeldung: 17.02.1993
(73) Patentinhaber: FRAUNHOFER-GESELLSCHAFT ZUR FÖRDERUNG DER ANGEWANDTEN FORSCHUNG E.V., 80636 München (DE)
(72) Erfinder: SEITZER, Dieter, Prof.Dr., D-8520 Erlangen (DE); CEPL, Franz, D-8510 Fürth (DE); DEIERLING, Armin, D-8535 Emskirchen (DE); HAUER, Johann, D-8520 Erlangen (DE)
(74) Vertreter: Schoppe, Fritz, Dipl.-Ing.
(86) Internationale Anmeldenummer: DE9100281
(87) Internationale Veröffentlichungsnummer: WO9117617

(56) Entgegenhaltungen:
- DE-A- 2 543 492
- DE-A- 3 714 595
- GB-A- 2 039 698

## Beschreibung

Die vorliegende Erfindung betrifft ein Sprachübertragungssystem mit einer Mehrzahl von Sprachstationen, die mittels einer Anzahl von Leitungen miteinander verbunden sind, welche niedriger als die Anzahl von Sprachübertragungskanälen zwischen den Sprachstationen ist.

Allgemein befaßt sich die vorliegende Erfindung mit dem Gebiet der mehrkanaligen Kommunikationssysteme für die Sprachübertragung beispielsweise innerhalb eines Hauses oder innerhalb eines Büros.

Allgemein ist es im Stand der Technik bekannt, innerhalb von Kommunikationssystemen eine Mehrzahl von Sendern und Empfängern bzw. Sendeempfängern mit einer entsprechenden Mehrzahl von Übertragungskanälen zu koppeln, die frequenzmäßig gegeneinander versetzt, bzw. frequenzmultiplex über eine gemeinsame Leitung ausgesendet werden. Hierbei ist üblicherweise ein Sendeempfängerpaar, das innerhalb des gleichen Kanales bzw. Frequenzbereiches arbeitet, mit paarweise übereinstimmenden Hardwarekomponenten realisiert, welche insbesondere die frequenzerzeugenden Teile bzw. Schwingquarze und zugeordneten Filterstufen umfassen. Ebenfalls ist es innerhalb derartiger Systeme üblich, zwischen dem mit dem gleichen Kanal arbeitenden Sender und Empfänger bzw. zwischen den beiden Sendeempfängern den Träger zu übertragen, auf den das Signal moduliert ist, um diesen am Ort des Empfängers zum Zwecke der Demodulation zu verwenden. In Abweichung hiervon ist es gleichfalls üblich, bei geeigneter Wahl der Modulationsart, das modulierte Signal trägerfrei zu übertragen und am Ort des Empfängers den Träger aus dem empfangenen Signal durch auf die Modulationsart abgestimmte Maßnahmen zu rekonstruieren. Diese genannten Systeme gestatten keine integrierte Implementierung der einzelnen Sprachstationen, die mit den unterschiedlichen Übertragungskanälen arbeiten, da schaltungsmäßige Abweichungen von Station zu Station auftreten.

Ebenfalls sind mehrkanalige Übertragungssysteme bekannt, die mit nur einem Kanal pro Leitung arbeiten. Systeme mit einer Mehrzahl von Kanälen erfordern daher zwangsläufig einen hohen Verdrahtungsaufwand.

Ausgehend von diesem Stand der Technik liegt der vorliegenden Erfindung die Aufgabe zugrunde, ein Sprachübertragungssystem der eingangs genannten Art so weiter zu bilden, daß deren Sprachstationen im wesentlichen als eine integrierte Schaltung realisierbar sind.

Diese Aufgabe wird bei einem Sprachübertragungssystem nach dem Oberbegriff des Patentanspruchs 1 durch die im kennzeichnenden Teil des Patentanspruchs 1 angegebenen Merkmale gelöst.

Bevorzugte Weiterbildungen des erfindungsgemäßen Sprachübertragungssystems sind in den Unteransprüchen angegeben.

Nachfolgend wird unter Bezugnahme auf die beiliegenden Zeichnungen ein bevorzugtes Ausführungsbeispiel des erfindungsgemäßen Sprachübertragungssystemes näher erläutert. Es zeigen:
- Fig. 1: ein Blockdiagramm eines Ausführungsbeispieles einer Sprachstation des erfindungsgemäßen Sprachübertragungssystemes;
- Fig. 2: eine Frequenzdarstellung des Übertragungsprinzipes;
- Fig. 3: ein Blockdiagramm einer Sprachübertragungsschaltung der in Fig. 1 gezeigten Sprachstation;
- Fig. 4: ein Ausführungsbeispiel der senderseitigen Analogschaltung der Sprachstation gem. Fig. 3; und
- Fig. 5: ein Blockdiagramm der empfängerseitigen Analogschaltung der Sprachstation gem. Fig. 3.

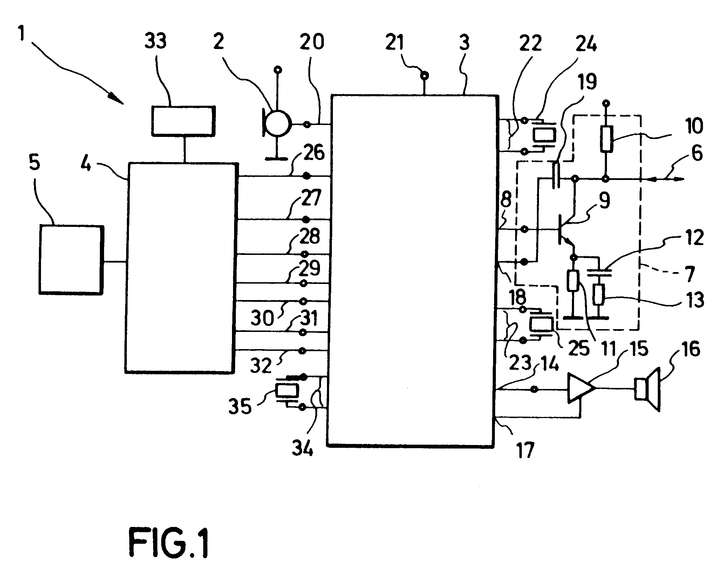

Eine in Fig. 1 in ihrer Gesamtheit mit dem Bezugszeichen 1 bezeichnete Sprachstation umfaßt im wesentlichen ein Mikrophon 2, eine Sprachübertragungsschaltung 3, einen Mikroprozessor 4, an den ein Eingabefeld 5 angeschlossen ist, sowie eine an eine Übertragungsleitung 6 sowie die Sprachübertragungsschaltung 3 angeschlossene Leitungsanpassungsschaltung 7.

Die Leitungsanpassungsschaltung 7 umfaßt einen basisseitig an einen Leitungsausgang 8 der Sprachübertragungsschaltung 3 angeschlossenen Transistor 9, dessen Emitter an die Übertragungsleitung 6 angeschlossen ist, die über einen ersten Widerstand 10 an ein Versorgungsspannungspotential gelegt ist. Der Emitter des Transistors 9 steht über eine Parallelschaltung aus einem zweiten Widerstand 11 und der Reihenschaltung eines dritten Widerstandes 13 und eines ersten Kondensators 12 mit Masse in Verbindung.

An einen Lautsprecherausgang 14 der Sprachübertragungsschaltung 3 ist ein Lautsprecherverstärker 15 angeschlossen, der ausgangsseitig mit einem Lautsprecher 16 verbunden ist. Der Lautsprecherverstärker 15 kann mittels eines Lautsprecherschaltausganges 17 der Sprachübertragungsschaltung 3 ein- und ausgeschaltet werden.

Ein Leitungsseingang 18 der Sprachübertragungsschaltung 3 ist über eine zweiten Kondensator 19 an die Übertragungsleitung 6 angeschlossen.

Das Mikrophon 2 ist mit einem Mikrophoneingang 20 der Sprachübertragungsschaltung 3 verbunden. Die Sprachübertragungsschaltung 3 verfügt ferner über einen Leistungseinschaltsignaleingang 21, dem bei jedem Einschalten der Leistungsversorgung des Systemes ein Rücksetzsignal zum Initialisieren von später noch zu erläuternden Steuerschaltungen und Teilerschaltungen der Sprachübertragungsschaltung zugeführt wird. An ein erstes und zweites Filteranschlußtor 22, 23 ist ein erstes, senderseitiges Keramik-Bandpaßfilter 24 bzw. ein zweites empfängerseitiges Keramik-Bandpaßfilter 25 angeschlossen, deren Mittenfrequenz bei dem gezeigten, bevorzugten Ausführungsbeispiel jeweils etwa 450 kHz beträgt.

Der Mikroprozessor 4 steht mit der Sprachübertragungsschaltung über einen Leitungsbus in Verbindung, der folgende Einzelleitungen umfaßt:
eine Rufsignalleitung 26, mittels der der Mikroprozessor 4 die Sprachübertragungsschaltung 3 zum Erzeugen eines Rufsignales oder eines den Belegtzustand der Sprachstation 1 darstellenden Signales veranlaßt;
eine Verstärkungssteuerleitung 27, über die dem Mikroprozessor 4 ein die Lautstärke des vom Mikrophon 2 abgegebenen Signales darstellendes Signal zugeführt wird;
eine Watchdogleitung 28 zum Rücksetzen des Mikroprozessors 4, falls sich dieser in einem sogenannten totgelaufenen Zustand befindet, in dem er über eine bestimmte Zeitdauer keine Daten abgibt;
eine Datenleitung 29 für die Datenübertragung;
eine Datentaktleitung 30 für die Übertragung des zu den Daten gehörigen Datentaktes von dem Mikroprozessor 4 zu einer (später erläuterten) digitalen Steuerschaltung der Sprachübertragungsschaltung 3;
sowie zwei Taktleitungen 31, 32, von denen eine 32 das negierte Taktsignal der anderen Leitung 31 führt.

Ferner ist an einem Quarzanschlußtor 34 der Sprachübertragungsschaltung 3 ein den Systemtakt und sämtliche Frequenzsignale des Systems festlegender Schwingquarz 35 angeschlossen.

Zur Anzeige des momentanen Betriebszustandes des Mikroprozessors 4 ist dieser mit einer Anzeigeeinheit 33 verbunden.

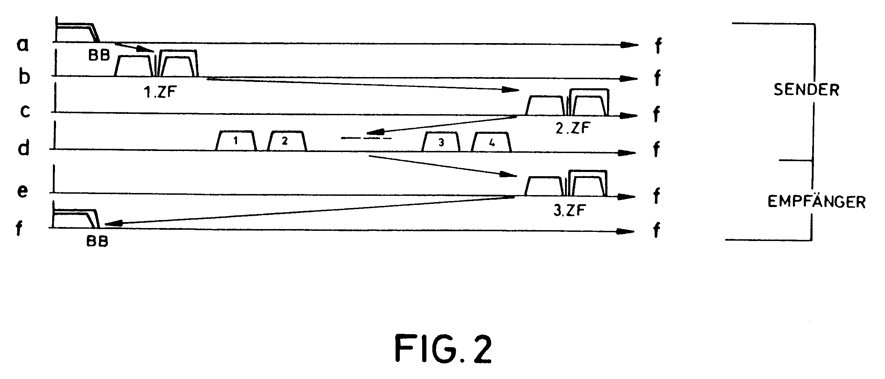

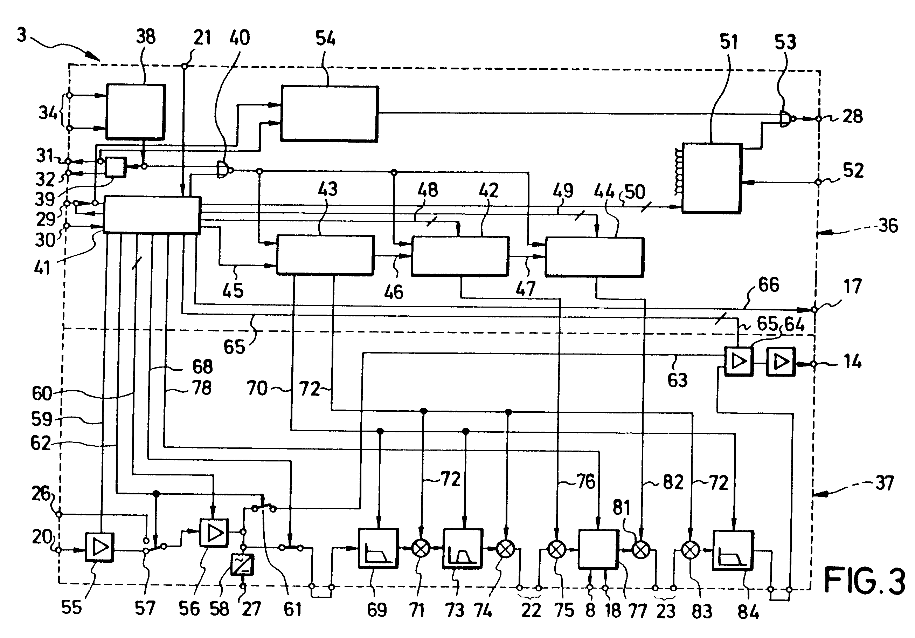

Bevor unter Bezugnahme auf die Fig. 3 - 6 schaltungsmäßige Einzelheiten der Sprachübertragungsschaltung 3 erläutert werden sollen, wird zunächst unter Bezugnahme auf Fig. 2 das Übertragungsprinzip des erfindungsgemäßen Sprachübertragungssystemes näher erläutert. In der Fig. 2 bezeichnen die Frequenzdiagramme a - d senderseitige Frequenzdiagramme und die Frequenzdiagramme e, f empfängerseitige Frequenzdiagramme.

Wie in Fig. 2 a zu sehen ist, wird zunächst das Basisband entsprechend dem Mikrophonausgangssignal durch Tiefpaßfilterung auf eine Bandbreite von 5 kHz-Frequenz begrenzt, sodann gem. Fig. 2 b auf eine erste Zwischenfrequenz von 11 kHz heraufgemischt. Hier findet eine derartige erste Bandpaßfilterung statt, daß das untere Seitenband sowie der Träger bei dieser Zwischenfrequenz , die Vielfachen der Modulationsfrequenz und die Aliasfrequenzen des Tiefpaßfilters entfallen. Wie in Fig. 2 c gezeigt ist, wird das so gewonnene Frequenzspektrum durch eine weitere frequenzmäßige Heraufmischung auf eine zweite Zwischenfrequenz von 450 kHz verschoben, wobei durch eine zweite Bandpaßfilterung wiederum das untere Seitenband und der Träger entfernt werden.

Nunmehr findet, wie in Fig. 2 d gezeigt ist, eine Herabmischung dieses Signals von der zweiten Trägerfrequenz auf die Kanalfrequenz statt, die etwa zwischen 20 und 130 kHz liegen kann. Für den Fachmann ist es offensichtlich, daß nach Mischung auch hier eine Tiefpaßfilterung zur Entfernung des Trägers stattfinden kann.

Wie in Fig. 2 e gezeigt ist, wird das Kanalband durch frequenzmäßiges Heraufmischen mit einer vom Empfangskanal abhängigen Frequenz auf die dritte Zwischenfrequenz angehoben, auf der eine weiterte Bandpaßfilterung zur Entfernung des Trägers und des unerwünschten Seitenbandes erfolgt, bevor gem. Fig. 2 f eine Herabmischung des Spektrums mit der dritten Zwischenfrequenz zum Erzeugen des Empfangssignales stattfindet, das durch Tiefpaßfilterung von unerwünschten Oberwellen befreit wird.

Nachfolgend wird unter Bezugnahme auf Fig. 3 eine bevorzugte Ausführungsform der erfindungsgemäßen Sprachübertragungsschaltung 3 näher erläutert. Die Sprachübertragungsschaltung 3 umfaßt ein Digitalschaltungsteil 36 sowie ein Analogschaltungsteil 37.

Das Digitalschaltungsteil umfaßt einen 18 MHz-Oszillator 38, der eingangsseitig über das Quarzanschlußtor 34 mit dem Schwingquarz 35 (Fig. 1) verbunden ist. Der Ausgang des 18 MHz-Oszillators 38 ist mit dem Eingang einer Vierteilungsschaltung 39 verbunden, die ausgangsseitig ein 4,5 MHz-Taktsignal sowie ein hierzu komplementäres Taktsignal an die beiden Taktleitungen 31, 32 liefert, über die der Mikroprozessor 4 mit seinem Systemtakt versorgt wird. Gleichfalls wird das Ausgangssignal des Oszillators über ein Gatter 40, welches von einer digitalen Steuerschaltung 41 geöffnet werden kann, einer steuerbaren ersten Frequenzteilervorrichtung 42, einer festen zweiten Frequenzteilervorrichtung 43 und einer steuerbaren dritten Frequenzteilervorrichtung 44 zugeführt. Die digitale Steuerschaltung 41 steht eingangsseitig mit der Datenleitung 29, der Datentaktleitung 30 und dem Leistungseinschaltsignaleingang 21 in Verbindung. Wenn an diesem ein Hoch-Signal anliegt, welches anzeigt, daß soeben die Leistung des Systemes eingeschaltet wird, setzt die digitale Steuerschaltung 41 über eine erste, zweite und dritte Rücksetzleitung 45, 46, 47 die feste, zweite Frequenzteilervorrichtung 43, die steuerbare, erste Frequenzteilervorrichtung 42 und die steuerbare, dritte Frequenzteilervorrichtung 44 zurück. Ausgangsseitig steht die digitale Steuerschaltung 41 über einen ersten Frequenzteilersteuerbus 48 mit der ersten Frequenzteilervorrichtung 42 und über einen zweiten Frequenzteilersteuerbus 49 mit der dritten Frequenzteilervorrichtung 44 in Verbindung. Ein dritter Steuerbus 50 steht mit dem Eingang eines Testmultiplexers 51 in Verbindung, der über einen Testeingang 52 aktivierbar ist und ein Rücksetzgatter 53 ansteuert. Ein Watchdogschaltung 54 ist eingangsseitig mit der Datenleitung 29 von dem Mikroprozessor 4 sowie mit der Taktleitung 31 verbunden und erzeugt ein Signal zum Rücksetzen des Mikroprozessors 4 über die Watchdogleitung 28, wenn sich der Mikroprozessor 4 in einem sogenannten totgelaufenen Zustand befindet und über eine Zeitdauer von beispielsweise 50 Millisekunden kein Datentransfer zwischen dem Mikroprozessor 4 und der Sprachübertragungsschaltung 3 stattfindet.

Nachfolgend wird der Aufbau des Analogschaltungsteiles 37 näher erläutert. An den Mikrophoneingang 20 ist ein erster steuerbarer Mikrophonverstärker 55 angeschlossen, dessen Ausgang über einen Umschalter 57 mit einem zweiten steuerbaren Mikrophonverstärker 56 verbunden ist. Der Verstärkungsgrad der beiden steuerbaren Mikrophonverstärker 55, 56 wird durch die digitale Steuerschaltung 41 und den Mikroprozessor 4 entsprechend des Rückkopplungssteuersignales an der Verstärkungsleitung 27 zum Mikroprozessor 4 gesteuert, das durch Gleichrichtung des Ausgangssignales des zweiten Mikrophonverstärkers 56 mittels eines Gleichrichters 58 gewonnen wird. Zu diesem Zwecke ist die digitale Steuerschaltung 41 ausgangsseitig über zwei Verstärkungssteuerleitungen 59, 60 mit den beiden Mikrophonverstärkern 55, 56 verbunden. Zur Erzeugung eines Rufsignales am Ausgang schaltet die digitale Steuerschaltung 41 den ersten Umschalter 57 und den zweiten Umschalter 61 mit einem entsprechenden Signal auf einer Umschaltleitung 62 in einen Schaltzustand, der entgegengesetzt zu dem in Fig. 3 gezeigten Schaltzustand ist. Hierdurch wird das Rufsignal von der Rufsignalleitung 26 über eine weitere Leitung 63 einem Lautsprecherverstärkerpaar 64 zugeführt, das ausgangsseitig mit dem Lautsprecherausgang 14 verbunden ist. Der Verstärkungsgrad dieses Lautsprecherverstärkerpaares wird von der digitalen Steuerschaltung 41 über einen Lautstärkersteuerbus 65 gesteuert. Ferner steuert die digitale Steuerschaltung 41 über eine Lautsprecherverstärkerschaltleitung 66 das Potential am Lautsprecherschaltausgang 17. Hierdurch kann der Lautsprecherverstärker 15 (Fig. 1) deaktiviert werden, wenn er nicht benötigt wird, um Leistung zu sparen.

Das verstärkte Mikrophonsignal am Ausgang des zweiten steuerbaren Mikrophonverstärkers 56 wird über einen dritten Umschalter 67, der durch eine Umschaltsteuerleitung 68 von der digitalen Steuerschaltung 41 betätigbar ist, einem ersten Tiefpaßfilter 69 zugeführt. Das erste Tiefpaßfilter 69 ist als Schalterkondensatorfilter integriert ausgeführt und hat eine Grenzfrequenz von 5 kHz. Die geschalteten Kapazitäten dieses Filters 69 werden von einer Kapazitätsschalttaktleitung 70 mit einer festen Frequenz von der festen, zweiten Frequenzteilervorrichtung versorgt. Dem ersten Tiefpaßfilter 69 ist ein erster Schaltermodulator 71 nachgeschaltet, der mit dem Ausgangssignal des ersten Tiefpaßfilters 69 und einem eine erste feste Grundfrequenz von 11 kHz aufweisenden ersten Rechteckmischsignal beaufschlagt wird. Dieses erste Rechteckmischsignal wird dem ersten Schaltermodulator 71 von der festen, zweiten Frequenzteilervorrichtung 43 über eine Leitung eines Zwischenfrequenzbus 72 zugeführt. Dem ersten Schaltermodulator 71 ist ein als Schalterkondensatorfilter integriert ausgeführtes erstes Bandpaßfilter 73 zur Einseitenbandfilterung des Ausgangssignales des ersten Schaltermodulators 71 nachgeschaltet. Das Schalten der Kapazitäten dieses geschalteten Kapazitätsfilters 73 wird durch die zweite Frequenzteilervorrichtung 43 über die Kapazitätsschaltleitung 70 veranlaßt.

Die Mittenfrequenz des ersten Bandpaßfilters 73 beträgt 13,5 kHz.

Ein zweiter Schaltermodulator 74 ist dem ersten Bandpaßfilter 73 nachgeschaltet. Diesem Schaltermodulator 74 wird das Ausgangssignal des ersten Bandpaßfilters 73 sowie ein eine zweite feste Grundfrequenz von 439 kHz aufweisendes zweites Rechteckmischsignal zugeführt. Dieses zweite Rechteckmischsignal wird gleichfalls von der zweiten Frequenzteilervorrichtung 43 erzeugt und über den Zwischenfrequenzbus 72 zu dem zweiten Schaltermodulator 74 geleitet. Der Ausgang des zweiten Schaltermodulators 74 und der Eingang eines dritten Schaltermodulators 75 sind an das erste Filteranschlußtor 22 angeschlossen, an das ein zweites Bandpaßfilter angeschlossen ist, das als konventionelles Analogfilter ausgeführt ist. Wie unter Bezugnahme auf Fig. 1 erläutert wurde, kann dieses Analogfilter als Keramikbandpaßfilter ausgeführt sein. Die Mittenfrequenz dieses Keramikbandpaßfilters beträgt ungefähr 450 kHz.

Der dritte Schaltermodulator wird mit dem Ausgangssignal des zweiten Bandpaßfilters 24 und mit einem dritten Rechteckmischsignal beaufschlagt, das ihm von der ersten steuerbaren Frequenzteilervorrichtung 48 über eine Kanalmodulationsfrequenzleitung 76 zugeführt wird. Das gezeigte Ausführungsbeispiel verfügt über 8 wählbare Kanäle zwischen 21 kHz und 130 kHz mit jeweils einer Bandbreite von 5 kHz.

Das Ausgangssignal des dritten Schaltermodulators 75 wird dem Leitungsausgang 8 über eine Leitungsschnittstellenschaltung 77 zugeführt.

Die Leitungsschnittstellenschaltung 77 wird durch die digitale Steuerschaltung 41 mittels der Sende-Empfangs-Steuerleitung 78 in einen Sendezustand geschaltet.

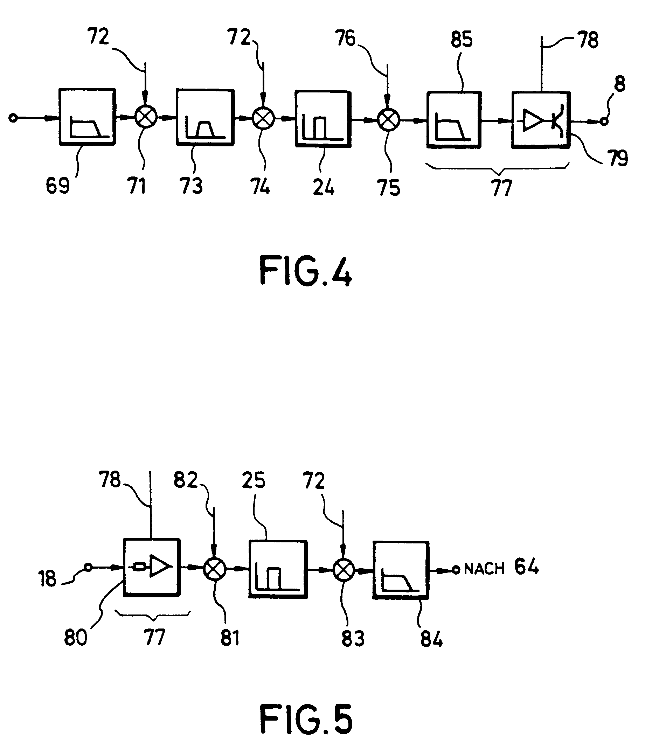

Wie aus Fig. 4, die den senderseitigen Analogschaltungsteil zeigt, erkenntlich ist, kann der senderseitige Teil der Leitungsschnittstellenschaltung 77 einen RC-Tiefpaß mit einer Grenzfrequenz von 150 kHz mit einer nachgeschalteten Leitungstreiberschaltung 79 umfassen, die als ein- und ausschaltbarer Verstärker ausgeführt ist, wobei der Ein- und Ausschaltzustand von der Sende-Empfangs-Steuerleitung 78 bestimmt wird.

Wie aus Fig. 5 ersichtlich ist, welche den empfängerseitigen Analogschaltungsteil der Sprachübertragungsschaltung 3 gem. Fig. 3 zeigt, kann die Leitungsschnittstellenschaltung 77 empfängerseitig durch eine an den Leitungseingang 18 angeschlossene Leitungsverstärkerschaltung 80 gebildet sein. Der Leitungsschnittstellenschaltung 77 (Fig. 3) bzw. der Leitungsverstärkerschaltung 80 (Fig. 5) ist ein vierter Schaltermodulator 81 nachgeschaltet, der mit einem eine vierte, wählbare Grundfrequenz aufweisenden vierten Rechteckmischsignal sowie dem empfangenen Eingangssignal zum Heraufmischen und Kanalmodulieren des empfangenen Eingangssignales beaufschlagt wird. Das vierte Rechteckmischsignal wird von der steuerbaren dritten Frequenzteilerschaltung 44 über die Kanaldemodulationsfrequenzleitung 82 zu dem vierten Schaltermodulator 81 zugeführt. Dem vierten Schaltermodulator ist ein als konventionelles Analogfilter ausgeführtes drittes Bandpaßfilter an dem zweiten Filteranschlußtor 23 nachgeschaltet. Dieses dritte Bandpaßfilter kann das zweite Keramikbandpaßfilter 25 (Fig. 1) sein.

Dem dritten Bandpaßfilter 25 ist ein fünfter Schaltermodulator 83 nachgeschaltet, der mit einem eine fünfte Grundfrequenz aufweisenden Rechteckmischsignal beaufschlagt wird, das diesem 83 über den Zwischenfrequenzbus 72 von der festen, zweiten Frequenzteilervorrichtung 43 zugeführt wird. Das Ausgangssignal des fünften Schaltermodulators 83 wird einem dritten Tiefpaßfilter 84 zugeführt, das als Schalterkondensatorfilter ausgeführt ist, eine Grenzfrequenz von 5 kHz hat und an die Kapazitätschalttaktleitung 70 angeschlossen ist, die ihrerseits mit der festen, zweiten Frequenzteilervorrichtung 43 verbunden ist. Der Ausgang dieses Tiefpaßfilters ist an einen weiteren Eingang des Lautsprecherverstärkerpaares 64 angeschlossen.

## Patentansprüche

1. Sprachübertragungssystem
mit einer Mehrzahl von Sprachstationen, die mittels einer Anzahl von Leitungen miteinander verbunden sind, welche niedriger als die Anzahl von Sprachübertragungskanälen zwischen den Sprachstationen ist,
wobei die Sprachstationen (1) miteinander übereinstimmend ausgebildet sind und jeweils folgende Merkmale aufweisen:
- eine digitale Steuervorrichtung (4, 41);
- ein Mikrophon (2);
- eine dem Mikrophon (2) nachgeschaltete Mikrophonverstärkereinrichtung (55, 56); und
- eine der Mikrophonverstärkereinrichtung (55, 56) nachgeschaltete Modulator- und Filtereinrichtung,
dadurch gekennzeichnet,
daß die Modulator- und Filtereinrichtung folgende Merkmale aufweist:
- ein der Mikrophonverstärkereinrichtung (55, 56) nachgeschaltetes, als Schalterkondensatorfilter integriert ausgeführtes erstes Tiefpaßfilter (69);
- ein dem ersten Tiefpaßfilter (69) nachgeschalteter erster Schaltermodulator (71), der mit dem Ausgangssignal des ersten Tiefpaßfilters (69) und mit einem ersten, eine erste feste Grundfrequenz aufweisenden Rechteckmischsignal beaufschlagt ist;
- ein dem ersten Schaltermodulator (71) nachgeschaltetes, als Schalterkondensatorfilter integriert ausgeführtes erstes Bandpaßfilter (73) zur Einseitenbandfilterung des Ausgangssignales des ersten Schaltermodulators (71);
- ein dem ersten Bandpaßfilter (73) nachgeschalteter zweiter Schaltermodulator (74), der mit dem Ausgangssignal des ersten Bandpaßfilters (73) und mit einem zweiten, eine zweite feste Grundfrequenz aufweisenden Rechteckmischsignal beaufschlagt ist;
- ein dem zweiten Schaltermodulator nachgeschaltetes, als konventionelles Analogfilter ausgeführtes zweites Bandpaßfilter (24);
- eine von der digitalen Steuervorrichtung (4, 41) angesteuerte, erste steuerbare Frequenzteilervorrichtung (42) mit wählbarer Ausgangsfrequenz; und
- ein dem zweiten Bandpaßfilter (24) nachgeschalteter dritter Schaltermodulator (75), der mit dem Ausgangssignal des zweiten Bandpaßfilters (24) und mit einem dritten Rechteckmischsignal von der steuerbaren ersten Frequenzteilervorrichtung (42) beaufschlagt ist.

2. Sprachübertragungssystem nach Anspruch 1, dadurch gekennzeichnet,
daß jede Sprachstation ferner aufweist:
- ein dem dritten Schaltermodulator (75) nachgeschaltetes zweites Tiefpaßfilter (85); und
- eine dem zweiten Tiefpaßfilter (85) nachgeschaltete Leitungstreiberschaltung (79), die ausgangsseitig mit der Leitung (6) verbunden ist.

3. Sprachübertragungssystem nach Anspruch 1 oder 2, dadurch gekennzeichnet,
daß jede Sprachstation ferner aufweist:
- einen Schwingquarz (35), der ausgangsseitig mit der steuerbaren ersten Frequenzteilervorrichtung (48) verbunden ist; und
- eine zweite, feste Frequenzteilervorrichtung (43), die eingangsseitig mit dem Schwingquarz (35) verbunden ist und ausgangsseitig die Rechteckmischsignale mit der ersten und zweiten festen Grundfrequenz erzeugt.

4. Sprachübertragungssystem nach einem der Ansprüche 1 - 3, dadurch gekennzeichnet,
daß jede Sprachstation (1) ferner aufweist:
- eine an die Leitung (6) angeschlossene Leitungsverstärkerschaltung (80);
- einen der Leitungsverstärkerschaltung (80) nachgeschalteten vierten Schaltermodulator (81), der mit einem vierten Rechteckmischsignal und dem Ausgangssignal der Leitungsverstärkerschaltung (80) beaufschlagt ist;
- eine von der digitalen Steuervorrichtung (4, 41) angesteuerte dritte, steuerbare Frequenzteilervorrichtung (44) mit wählbarer Ausgangsfrequenz zum Erzeugen des vierten Rechteckmischsignales;
- ein dem vierten Schaltermodulator (81) nachgeschaltetes, als konventionelles Analogfilter ausgeführtes drittes Bandpaßfilter (25) zur Bandfilterung des Ausgangssignales des vierten Schaltermodulators (81);
- ein dem dritten Bandpaßfilter (25) nachgeschalteter fünfter Schaltermodulator (83), der mit dem Ausgangssignal des dritten Bandpaßfilters (25) und einem fünften, eine fünfte Grundfrequenz aufweisenden Rechteckmischsignal beaufschlagt ist; und
- ein als Schalterkondensatorfilter integriert ausgeführtes drittes Tiefpaßfilter (84), das dem fünften Schaltermodulator (83) nachgeschaltet ist.

5. Sprachübertragungssystem nach einem der Ansprüche 1 - 4, dadurch gekennzeichnet,
daß das erste, zweite, dritte, vierte und fünfte Rechteckmischsignal durch Frequenzteilung von dem gleichen Schwingquarz (35) abgeleitet sind.

6. Sprachübertragungssystem nach einem der Ansprüche 1 - 5, dadurch gekennzeichnet,
daß eine Sprachübertragungsschaltung (3) einer jeden Sprachstation (1) als integrierte Schaltung ausgeführt ist; und
daß das zweite Bandpaßfilter und das dritte Bandpaßfilter als Keramikfilter ausgebildet sind, die außerhalb der integrierten Schaltung angeordnet sind.

7. Sprachübertragungssystem nach einem der Ansprüche 1 - 6, dadurch gekennzeichnet,
daß die als gesteuerte Kapazitätsfilter ausgeführten Filter (69, 73, 84) mit einem Kapazitätsschalttaktsignal angesteuert werden, das von dem gleichen Schwingquarz (35) abgeleitet ist, von dem auch das erste, zweite, dritte, vierte und fünfte Rechteckmischsignal abgeleitet sind.

## Claims

1. A voice transmission system comprising
a plurality of voice stations interconnected by means of a number of lines which is lower than the number of voice transmission channels between the voice stations,
said voice stations (1) having an identical structural design and being each provided with the following features:
- a digital control device (4, 41);
- a microphone (2);
- a microphone amplifier means (55, 56) located downstream of said microphone (2); and
- a modulator and filter means located downstream of said microphone amplifier means (55, 56),
characterized in that
the modulator and filter means has the following features:
- a first lowpass filter (69) implemented as an integrated switched capacitor filter and located downstream of the microphone amplifier means (55, 56);
- a first switch modulator (71) located downstream of the first lowpass filter (69) and acted upon by the output signal of said first lowpass filter (69) and by a first square-wave mixed signal having a first fixed fundamental frequency;
- a first bandpass filter (73) implemented as an integrated switched capacitor filter and located downstream of the first switch modulator (71), said first bandpass filter (73) being used for single-sideband filtering of the output signal of the first switch modulator (71);
- a second switch modulator (74) located downstream of said first bandpass filter (73) and acted upon by the output signal of said first bandpass filter (73) and by a second square- wave mixed signal having a second fixed fundamental frequency ;
- a second bandpass filter (24) implemented as a conventional analog filter and located downstream of the second switch modulator;
- a first controllable frequency divider device (42) which has a selectable output frequency and which is controlled by the digital control device (4, 41); and
- a third switch modulator (75) located downstream of said second bandpass filter (24) and acted upon by the output signal of said second bandpass filter (24) and by a third square-wave mixed signal coming from the controllable first frequency divider device (42).

2. A voice transmission system according to claim 1, characterized in
that each voice station additionally comprises:
- a second lowpass filter (85) located downstream of the third switch modulator (75); and
- a line driver circuit (79) located downstream of the second lowpass filter (85) and having its output side connected to the line (6).

3. A voice transmission system according to claim 1 or 2, characterized in
that each voice station additionally comprises:
- a quartz oscillator (35) having is output side connected to the controllable first frequency divider device (48); and
- a second fixed frequency divider device (43) having its input side connected to the quartz oscillator (35) and producing on its output side the square-wave mixed signals with the first and second fixed fundamental frequencies.

4. A voice transmission system according to one of the claims 1 - 3, characterized in
that each voice station (1) additionally comprises:
- a line amplifier circuit (80) connected to the line (6);
- a fourth switch modulator (81) located downstream of the line amplifier circuit (80) and acted upon by a fourth square-wave mixed signal and by the output signal of the said line amplifier circuit (80),
- a third controllable frequency divider device (44) having a selectable output frequency, said third frequency divider device (44) being controlled by the digital control device (4, 41) and being used for producing the fourth square-wave mixed signal;
- a third bandpass filter (25) implemented as a conventional analog filter and located downstream of the fourth switch modulator (81), said third bandpass filter (25) being used for band-filtering the output signal of the fourth switch modulator (81);
- a fifth switch modulator (83) located downstream of the third bandpass filter (25) and acted upon by the output signal of said third bandpass filter (25) and by a fifth square-wave mixed signal having a fifth fundamental frequency; and
- a third lowpass filter (84) implemented as an integrated switched capacitor filter and located downstream of the fifth switch modulator (83).

5. A voice transmission system according to one of the claims 1 - 4, characterized in
that the first, second, third, fourth and fifth square-wave mixed signals are derived from the same quartz oscillator (35) by frequency division.

6. A voice transmission system according to one of the claims 1 - 5, characterized in
that a voice transmission circuit (3) of each voice station (1) is implemented as an integrated circuit; and
that the second bandpass filter and the third bandpass filter are implemented as ceramic filters which are arranged outside of the integrated circuit.

7. A voice transmission system according to one of the claim 1 - 6, characterized in
that the filters (69, 73, 84) implemented as controlled capacitance filters are controlled by a capacitance switch clock signal which is derived from the same quartz oscillator (35) from which also the first, second, third, fourth and fifth square-wave signals are derived.

## Revendications

1. Système de transmission vocale
avec une pluralité de postes téléphoniques qui sont reliés entre eux à l'aide d'un certain nombre de lignes qui est inférieur au nombre de canaux de transmission vocale entre les postes téléphoniques,
les postes téléphoniques (1) étant réalisés de manière coïncidente entre eux et présentant, chacun, les caractéristiques suivantes:
- un dispositif de commande numérique (4, 41),
- un microphone (2)
- un dispositif amplificateur de microphone (55, 56) connecté après le microphone (2), et
- un dispositif modulateur et filtre connecté après le dispositif amplificateur de microphone (55, 56),
caractérisé en ce que le dispositif modulateur et filtre présente les caractéristiques suivantes:
- un premier filtre passe-bas (69), se présentant intégré sous forme de commutateur-condensateur-filtre, connecté après le dispositif amplificateur de microphone (55, 56),
- un premier commutateur-modulateur (71), connecté après le premier filtre passe-bas (69), qui est soumis à l'admission du signal de sortie du premier filtre passe-bas (69) et d'un premier signal de mélange rectangulaire présentant une première fréquence de base fixe,
- un premier filtre passe-bas (73), connecté après le premier commutateur-modulateur (71), se présentant intégré sous forme de commutateur-condensateur-filtre, pour la filtration de la bande d'un côté du signal de sortie du premier commutateur-modulateur (71),
- un second commutateur-modulateur (74), connecté après le premier filtre passe-bande (73), qui est soumis à l'admission du signal de sortie du premier filtre passe-bande (73) et d'un second signal de mélange rectangulaire présentant une seconde fréquence de base fixe,
- un second filtre passe-bande (24) se présentant sous forme de filtre analogique conventionnel, connecté après le second commutateur-modulateur,
- un premier dispositif diviseur de fréquence réglable (42) à fréquence de sortie sélectionnable, commandé par le dispositif de commande numérique (4, 41), et
- un troisième commutateur-modulateur (75), connecté après le second filtre passe-bande (24), qui est soumis à l'admission du signal de sortie du second filtre passe-bande (24) et d'un troisième signal de mélange rectangulaire du premier dispositif diviseur de fréquence réglable (42).

2. Système de transmission vocale suivant la revendication 1, caractérisé en ce que chaque poste téléphonique présente, par ailleurs:
- un second filtre passe-bas (85) connecté après le troisième commutateur-modulateur (75), et
- un circuit d'excitation de ligne (79), connecté après le second filtre passe-bas (85), qui est relié, du côté sortie, à la ligne (6).

3. Système de transmission vocale suivant la revendication 1 ou 2, caractérisé en ce que chaque poste téléphonique présente, par ailleurs:
- un quartz oscillant (35) qui est relié, du côté sortie, au premier dispositif diviseur de fréquence réglable (48), et
- un second dispositif diviseur de fréquence fixe (43) qui est relié, du côté entrée, au quartz oscillant (35) et génère, du côté sortie, les signaux de mélange rectangulaires à la première et à la seconde fréquence fixe.

4. Système de transmission vocale suivant l'une des revendications 1 à 3, caractérisé en ce que chaque poste téléphonique (1) présente, par ailleurs:
- un circuit amplificateur de ligne (80) raccordé à la ligne (6),
- un quatrième commutateur-modulateur (81), connecté après le circuit amplificateur de ligne (80), qui est soumis à l'admission d'un quatrième signal de mélange rectangulaire et du signal de sortie du circuit amplificateur de ligne (80),
- un troisième circuit diviseur de fréquence réglable (44) à fréquence de sortie sélectionnable, commandé par le dispositif de commande numérique (4, 41), destiné à générer le quatrième signal de mélange rectangulaire,
- un troisième filtre passe-bande (25) se présentant sous forme de filtre analogique conventionnel, connecté après le quatrième commutateur-modulateur (81), destiné à la filtration de bande du signal de sortie du quatrième commutateur-modulateur (81),
- un cinquième commutateur-modulateur (83), connecté après le troisième filtre passe-bande (25), qui est soumis à l'admission du signal de sortie du troisième filtre passe-bande (25) et d'un cinquième signal de mélange rectangulaire présentant une cinquième fréquence de base, et
- un troisième filtre passe-bas (84), qui se présente intégré sous forme de commutateur-condensateur-filtre, qui est connecté après le cinquième commutateur-modulateur (83).

5. Système de transmission vocale suivant l'une des revendications 1 à 4, caractérisé en ce que les premier, second, troisième, quatrième et cinquième signaux de mélange rectangulaires sont dérivés, par division de fréquence, du même quartz oscillant (35).

6. Système de transmission vocale suivant l'une des revendications 1 à 5, caractérisé en ce
qu'un circuit de transmission vocale (3) de chacun des postes téléphoniques (1) se présente sous forme de circuit intégré, et
que le second filtre passe-bande et le troisième filtre passe-bande se présentent sous forme de filtres céramiques qui sont disposés en dehors du circuit intégré.

7. Système de transmission vocale suivant l'une des revendications 1 à 6, caractérisé en ce que les filtres (69, 73, 84) se présentant sous forme de filtres de capacité commandés sont commandés par un signal d'impulsion de commutation de capacité qui est dérivé du même quarz oscillant (35) duquel sont également dérivés les premier, second, troisième, quatrième et cinquième signaux de mélange rectangulaires.
